# EUROPEAN PATENT APPLICATION

(11) **EP 4 203 385 A1**
(43) Date of publication of application: **28.06.2023**
(21) Application number: 21216279.6
(22) Date of filing: 21.12.2021
(51) Int. Cl.: H04L 9/40, G05B 19/18

(54) **METHOD FOR DISTRIBUTING KEYS AMONGST INDUSTRIAL DEVICES IN AN INDUSTRIAL FACILITY**

(71) Applicant: Siemens Aktiengesellschaft, 80333 München (DE)
(72) Inventor: Baur, Nils, 91058 Erlangen (DE); Fischer, Thomas, 91056 Erlangen (DE); Höme, Stephan, 91126 Schwabach (DE); Kerschbaum, Sven, 90768 Fürth (DE)
(74) Representative: Siemens Patent Attorneys

(57) **Abstract**

The current disclosure describes a method for distributing keys amongst a plurality of industrial devices in an industrial facility. The method by a connection manager, comprises creating a first security group including two or more industrial devices from the plurality of the industrial devices and is for communication of process data amongst the industrial devices, creating a second security group including one or more industrial devices and a security key service, wherein the second security group is for the distribution of keys, and configuring the security key service as a publisher and the one or more industrial devices as subscribers in the second security group, wherein the security key service is configured to publish keys to the industrial devices. Accordingly, the current disclosure allows for distribution of keys using the connection manager without configuration of the industrial devices for communication with the security key service.

## Description

### Background:

The current disclosure relates to security and more particularly to key management in industrial systems. OPC UA is a well-established standard for communication in the automation domain. The OPC UA publication subscription model utilizes symmetric keys issued by a Security Key Service (SKS), for security. For the distribution of symmetric keys from SKS to publisher(s) and subscriber(s), two different models (OPC UA 10000-14) are provided: a pull model where each device actively reads the keys from the security key service, and a push model where the security key service sends the keys to the devices. However, both the models suffer from certain disadvantages. Particularly, in both the models, the devices have to be configured for communication with the security key service and may require additional efforts.

### Description:

The current disclosure describes a method and a connection manager which addresses the issues mentioned above.

Accordingly, the current disclosure describes a method for distributing one or more keys amongst a plurality of industrial devices in an industrial facility. The method is realized by the connection manager. The method comprises creating a first security group, wherein the first security group includes two or more industrial devices from the plurality of the industrial devices and is for communication of process data amongst the two or more industrial devices, creating a second security group including one or more industrial devices from the plurality of industrial devices and a security key service wherein the second security group is for the distribution of keys, configuring the security key service as a publisher and the one or more industrial devices as subscribers in the second security group, wherein the security key service is configured to publish one or more keys to the one or more industrial devices.

Accordingly, the current disclosure describes a method wherein the process of distribution of the keys is managed by the connection manager. The connection manager is configured to create the groups using which the distribution of the keys happens without configuring the devices to communicate with the security key service specifically or configuring the security key service to specifically communicate with the devices. This allows for simple distribution of security keys using the connection manager.

In an embodiment the one or more keys are used in relation to the communication of the process data within the first security group. Accordingly, the keys distributed via the second security group are used to ensure that communication happening via the first security group is encrypted and secure. In an embodiment, each key from the one or more keys is configured to expire after one of a predefined time period and a predefined communication data threshold. Accordingly, each key is utilized only for a certain time or for a certain amount of data communication after which the key expires. This ensures that the overall risk is minimized by ensuring keys are updated regularly. In an embodiment, the method further comprises determining an expiry of at least one key from the one or more keys, and transmitting a message to the security key service for generation of a new key.

In another aspect, the current disclosure describes a connection manager for distributing one or more keys amongst a plurality of industrial devices in an industrial facility. The connection manager comprises one or more processors connected to a memory module. The one or more processors are configured to create a first security group wherein the first security group includes two or more industrial devices from the plurality of the industrial devices and is for communication of process data amongst the two or more industrial devices, create a second security group including one or more industrial device from the plurality of industrial devices and a security key service, wherein the second security group is for the distribution of keys, configure the security key as a publisher and the one or more industrial devices as subscribers in the second security group, wherein the security key service is configured to publish one or more keys to the one or more industrial devices.

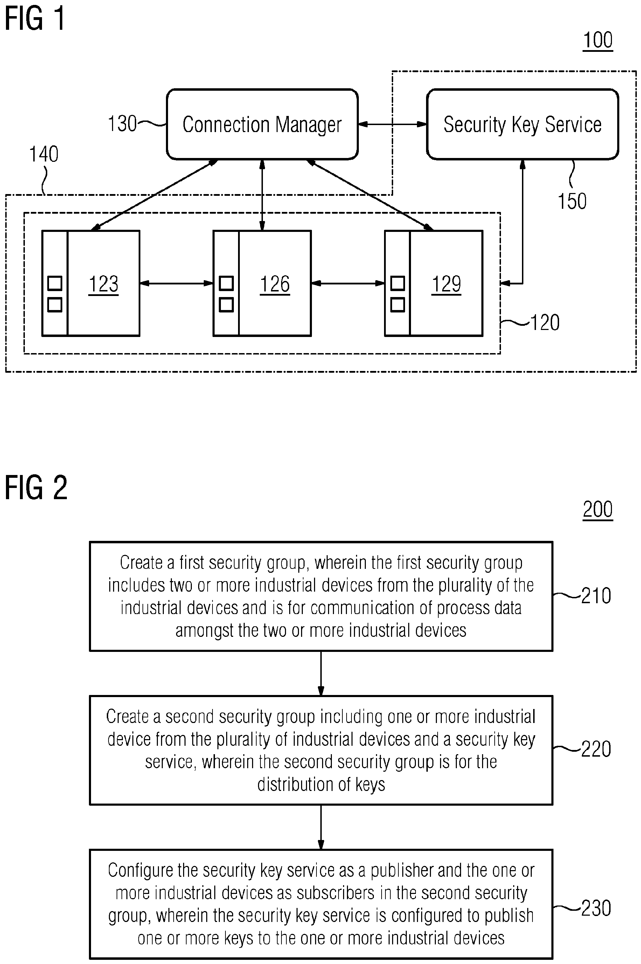

In yet another aspect, the current disclosure describes a non transitory storage medium comprising a plurality of instructions, which when executed on one or more processors, cause the one or more processors to create a first security group wherein the first security group includes two or more industrial devices from the plurality of the industrial devices and is for communication of process data amongst the two or more industrial devices, create a second security group including one or more industrial device from the plurality of industrial devices and a security key service, wherein the second security group is for the distribution of keys, configure the security key as a publisher and the one or more industrial devices as subscribers in the second security group, wherein the security key service is configured to publish one or more keys to the one or more industrial devices. The advantages of the method apply to the connection manager and the non transitory storage medium. These aspects are further explained in relation to figures 1-3.
Figure 1 illustrates a section of industrial automation facility comprising a plurality of industrial devices and a connection manager for distributing one or more keys amongst a plurality of industrial devices;
Figure 2 illustrates a method for distributing one or more keys amongst a plurality of industrial devices in an industrial facility; and
Figure 3 illustrates a connection manager for distributing one or more keys amongst a plurality of industrial devices in an industrial facility.

Figure 1 illustrates a section 100 of the industrial facility containing a plurality of industrial devices 123, 126 and 129. Industrial facility herein refers to any environment where one or more industrial processes such as manufacturing, refining, smelting, assembly of equipment may take place and includes process plants, oil refineries, automobile factories, warehouses, etc. The industrial facility comprises a plurality of industrial devices and industrial subsystems such as control devices, field devices, operator stations, process historians, etc. Control devices includes process controllers, programmable logic controllers, supervisory controllers, automated guidance vehicles, robots, operator devices, etc. Control devices are connected to a plurality of field devices (not shown in figure) such as actuators and sensor devices for monitoring and controlling industrial processes in the industrial facility. These field devices can include flowmeters, value actuators, temperature sensors, pressure sensors, etc. The control devices may be connected to each other via a control network (realized via wired and wireless networks). Operator stations display the status of the industrial plant to an operator and for allowing the operator to define setpoints for the control of the industrial processes in the facility.

The industrial devices are configured to communicate with each other using OPC UA protocols. Additionally, the industrial facility 100 includes a connection manager 130. The connection manager 130 is responsible for establishing a bidirectional relationship between 2 (or more) industrial devices (also referred to as automation components). As an OPC UA Client, it establishes a connection to the OPC UA servers in the Automation Components and configures industrial devices with publishers and/or subscribers roles. Publisher or subscriber herein refers to an industrial device or a subsystem of the industrial automation system. For example, publishers can include sensors configured to publish sensor data to subscribers including controllers, process historians, operator stations, etc. Publisher is configured to publish industrial data either at periodic intervals or at irregular intervals. Similarly, the subscribers are configured to receive data from one or more publisher it is subscribed to.

Additionally, the industrial facility includes a Security Key Service 150. Since the publishers and subscribers are loosely coupled (i.e. publishers do not know the subscribers), publishers and subscribers require a security service which manages encryption and decryption keys (used for authentication and authorization). To ensure security, the publishers use digital keys to sign or sign and encrypt published data. The subscribers are configured to determine the authenticity of the published data on the basis of the signature of the publisher. Similarly, the subscribers may use decryption keys for decryption of the published data from the publishers.

Generation and management of such keys is performed by the Security Key Service 150. The Security Key Service 150 is in accordance to specifications of OPC 10000-14 5.3.7 and 5.4.3. The Security Key Service (SKS) generates the required keys with a defined lifetime which may be defined by the publisher Subsequent to the generation of the keys and upon receiving key request from publishers or subscribers, the Security Key Service transmits the keys to the publishers and to the subscribers, so that the publisher may encrypt messages using the keys and the subscriber may decrypt the messages using the keys. Such distribution of the keys is facilitated by the connection manager 130.

During the configuration of the industrial devices to enable OPC UA communication amongst the industrial devices. The connection manager 130 is configured to setup a security group comprising the security key service and the industrial devices for the distribution of the keys. By creating the security group, the need to configure the security key service to enable communication with each of the industrial devices or configure each of the industrial devices to communicate with the security key service is eliminated. Accordingly, the utilization of the connection manager 130 enables for effective and simple distribution of keys, especially for industrial devices which are being commissioned to operate within the industrial facility. This is further explained in reference to figure 2.

Figure 2 illustrates a method 200 for distributing one or more keys amongst a plurality of industrial devices 123, 126, 129 in an industrial facility. In an embodiment, the method 200 is performed by the connection manager 130. It may be understood that while the method 200 below is explained in relation to connection manager 130, the method 200 may be realized by one or more software modules or other industrial device capable of implementing the connection manager 130.

The method 200 is realized by the connection manager 130 when a plurality of industrial devices 123, 126 and 129 are being installed in the industrial facility. The industrial devices 123, 126 and 129 have not yet been completely configured to communicate with the security key service 150 and have their communications configured by the connection manager 130. The connection manager 130 is configured to establish communications based on connection configuration data associated with industrial devices 123, 126 and 129. Details regarding the connection manager may be found in the OPC UA FX (field exchange) specifications (OPC 10000-080, OPC 10000-081) .

At step 210, the connection manager 130 creates a first security group 120. The first security group 120 includes two or more industrial devices (123, 126, 129) from the plurality of the industrial devices (123, 126, 129) and is for communication of process data amongst the two or more industrial devices (123, 126, 129). The connection manager 130 may use connection configuration data associated with the two or more industrial devices to set up the first security group. For example, the connection configuration data may include the network addresses of the industrial devices, publishers and subscribers roles to be assigned in the first security group, parameters associated with publishers and subscribers such as publishing interval rate for the publishers, message receive timeouts for the subscribers, etc.

Then at step 220, the connection manager 130 creates a second security group 140. The second security group 140 includes one or more industrial device (123, 126, 129) from the plurality of industrial devices (123, 126, 129) and a security key service 150. The second security group 140 is created by the connection manager 130 for communication of the keys from the security key service 150 to the industrial device (123, 126 and 129). The connection manager 130 includes network information associated with the security key service 150 and utilizes the network information associated with the security key service 150 and the connection configuration data associated with the two or more industrial devices (123, 126 and 129).

Then, at step 230, the connection manager 130 configures the security key service 150 as a publisher and the one or more industrial devices (123, 126, 129) as subscribers in the second security group 140. Accordingly, the security key service 150 is configured to publish one or more keys to the one or more industrial devices (123, 126, 129). This allows the generation of keys by the security key service 150 and the subsequent distribution of the keys to the industrial devices (123, 126 and 129) without configuration of the security key service 150 to communicate with each of the industrial devices (12, 126 and 129). The distributed keys are then used in relation to the communication of the process data within the first security group 120.

Additionally, each key from the one or more keys is configured to expire after one of a predefined time period and a predefined communication data threshold. This ensures that the overall security is not compromised in case one of the keys is compromised due to a malicious agent. For example, after a predetermined time period (for example 24 hours), the key is configured to expire. Similarly, after the key has been used in communication of data of a predefined size (for example 500 Megabytes), the key is configured to expire. In an embodiment, the method 200 further comprises determining by the connection manager 130 an expiry of at least one key from the one or more keys and transmitting a message to the security key service (150) for generation of a new key. For example, the connection manager in coordination with the one or more industrial devices, evaluates if a key has expired.

Accordingly, the current disclosure describes a method of distribution of the keys is managed by the connection manager. The connection manager is configured to create the groups using which the distribution of the keys happens without configuring the devices to communicate with the security key service specifically or configuring the security key service to specifically communicate with the devices. This allows for simple distribution of security keys using the connection manager.

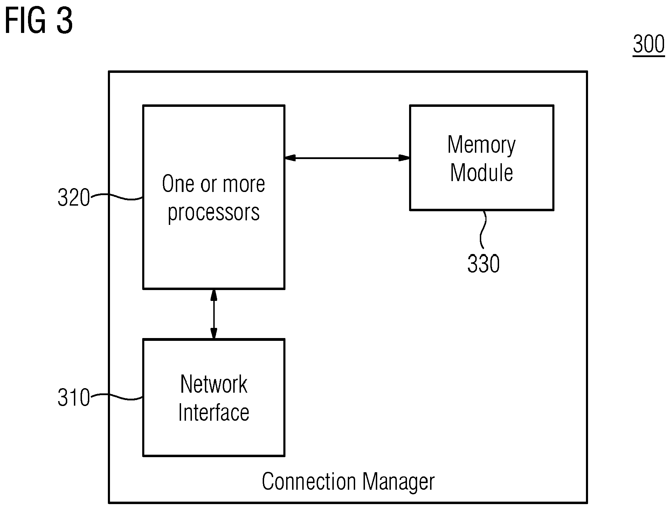

It may be noted that while the above mentioned is explained in reference to the connection manager 130, the above method may be realised using one or more devices or via one or more software modules. Accordingly, the current disclosure describes a connection manager device (also referred to as connection manager) which is further described in relation to figure 3.

Figure 3 illustrates a connection manager device 300 for distributing one or more keys amongst a plurality of industrial devices (123, 126, 129) in an industrial facility. The connection manager device 300 comprises one or more processors 320 connected to a memory module 330. Additionally, the connection manager device 300 includes a network interface 310. The network interface 310 enables the connection manager device 300 to send and receive data with the industrial devices.

The memory module 330 comprises a plurality of instructions which when executed on the one or more processors 320 cause the one or more processors to create a first security group 120. The first security group 120 includes two or more industrial devices (123, 126, 129) from the plurality of the industrial devices (123, 126, 129) and is for communication of process data amongst the two or more industrial devices (123, 126, 129). Then, the one or more processors 320 create a second security group 140 which includes one or more industrial device (123, 126, 129) from the plurality of industrial devices (123, 126, 129) and the security key service 150. The second security group 140 is for the distribution of keys for use in communication in relation to the first security group. Then, the one or more processors 320 configure the security key service 150 as a publisher within the second security group 140 along the one or more industrial devices (123, 126, 129) as subscribers within the second security group (140).

Accordingly, the security key service 150 is configured to publish one or more keys to the one or more industrial devices (123, 126, 129).

For the purpose of this description, a computer-usable or computer-readable non-transitory storage medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processing units and program code for implementing each aspect of the technology can be centralized or distributed (or a combination thereof) as known to those skilled in the art.

While the current disclosure is described with references to few industrial devices, a plurality of industrial devices may be utilized in the context of the current disclosure. While the present disclosure has been described in detail with reference to certain embodiments, it should be appreciated that the present disclosure is not limited to those embodiments.

In view of the present disclosure, many modifications and variations would be present themselves, to those skilled in the art without departing from the scope of the various embodiments of the present disclosure, as described herein. The scope of the present disclosure is, therefore, indicated by the following claims rather than by the foregoing description. All changes, modifications, and variations coming within the meaning and range of equivalency of the claims are to be considered within their scope. All advantageous embodiments claimed in method claims may also be apply to device/non transitory storage medium claims.

## Claims

1. A method (200) for distributing one or more keys amongst a plurality of industrial devices (123, 126, 129) in an industrial facility, the method (200), by a connection manager (130), the method (200) comprising:
a. creating (210) a first security group (120), wherein the first security group (120) includes two or more industrial devices (123, 126, 129) from the plurality of the industrial devices (123, 126, 129) and is for communication of process data amongst the two or more industrial devices (123, 126, 129);
b. creating (220) a second security group (140), including one or more industrial device (123, 126, 129) from the plurality of industrial devices (123, 126, 129) and a security key service (150), wherein the second security group (140) is for the distribution of keys;
c. configuring (230) the security key service (150) as a publisher and the one or more industrial devices (123, 126, 129) as subscribers in the second security group (140), wherein the security key service (150) is configured to publish one or more keys to the one or more industrial devices (123, 126, 129).

2. The method (200) as claimed in claim 1, wherein the one or more keys are used in relation to the communication of the process data within the first security group (120) .

3. The method (200) as claimed in claim 1, wherein the each key from the one or more keys is configured to expire after one of a predefined time period and a predefined communication data threshold.

4. The method (200) as claimed in claim 1, wherein the method (200) further comprises determining an expiry of at least one key from the one or more keys, and transmitting a message to the security key service (150) for generation of a new key.

5. A connection manager (300) for distributing one or more keys amongst a plurality of industrial devices (123, 126, 129) in an industrial facility, the connection manager (300) comprising:
a. One or more processors connected to a memory module, the one or more processors (320) configured to:
i. create a first security group (120), wherein the first security group (120) includes two or more industrial devices (123, 126, 129) from the plurality of the industrial devices (123, 126, 129) and is for communication of process data amongst the two or more industrial devices (123, 126, 129);
ii. create a second security group (140), including one or more industrial device (123, 126, 129) from the plurality of industrial devices (123, 126, 129) and a security key service (150), wherein the second security group (140) is for the distribution of keys;
iii. configure the security key service (150) as a publisher and the one or more industrial devices (123, 126, 129) as subscribers in the second security group (140), wherein the security key service (150) is configured to publish one or more keys to the one or more industrial devices (123, 126, 129).

6. The connection manager (300) as claimed in claim 5,
wherein the one or more keys are used in relation to the communication of the process data within the first security group (120).

7. The connection manager (300) as claimed in claim 5,
wherein the each key from the one or more keys is configured to expire after one of a predefined time period and a predefined communication data threshold.

8. The connection manager (300) as claimed in claim 5,
wherein the one or more processors are configured to determine an expiry of at least one key from the one or more keys, and transmit a message to the security key service (150) for generation of a new key.

9. A non transitory storage medium (330) for distributing one or more keys amongst a plurality of industrial devices (123, 126, 129) in an industrial facility, the non transitory storage medium (330) comprising a plurality of instructions, which when executed on one or more processors (320), cause the one or more processors (320) to:
a. create a first security group (120), wherein the first security group (120) includes two or more industrial devices (123, 126, 129) from the plurality of the industrial devices (123, 126, 129) and is for communication of process data amongst the two or more industrial devices (123, 126, 129);
b. create a second security group (140), including one or more industrial device (123, 126, 129) from the plurality of industrial devices (123, 126, 129) and a security key service (150), wherein the second security group (140) is for the distribution of keys; and
c. configure the security key service (150) as a publisher and the one or more industrial devices (123, 126, 129) as subscribers in the second security group (140), wherein the security key service (150) is configured to publish one or more keys to the one or more industrial devices (123, 126, 129).
